(19) Europäisches Patentamt
European Patent Office
Office européen des brevets

(11) **EP 4 617 384 A1**

(12) **EUROPEAN PATENT APPLICATION**
published in accordance with Art. 153(4) EPC

(43) Date of publication:
**17.09.2025 Bulletin 2025/38**

(21) Application number: **23916084.9**

(22) Date of filing: **05.09.2023**

(51) International Patent Classification (IPC):
**C21B 7/24** (2006.01)   **F27B 1/28** (2006.01)
**F27D 21/00** (2006.01)

(52) Cooperative Patent Classification (CPC):
**C21B 7/24; F27B 1/28; F27D 21/00**

(86) International application number:
**PCT/JP2023/032420**

(87) International publication number:
**WO 2024/150464 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.01.2023 JP 2023002761**

(71) Applicant: **JFE Steel Corporation**
**Tokyo 100-0011 (JP)**

(72) Inventors:
• **MATSUNAGA Ryotaro**
**Tokyo 100-0011 (JP)**
• **MORIYA Kota**
**Tokyo 100-0011 (JP)**
• **YAMAMOTO Tetsuya**
**Tokyo 100-0011 (JP)**

(74) Representative: **Hoffmann Eitle**
**Patent- und Rechtsanwälte PartmbB**
**Arabellastraße 30**
**81925 München (DE)**

(54) **MOLTEN MATERIAL HEIGHT DETECTION METHOD, MOLTEN MATERIAL HEIGHT DETECTION DEVICE, AND MOLTEN MATERIAL PRODUCING METHOD**

(57)     Provided is a molten material height detection method that can easily identify a frequency at which a molten material height in a smelting furnace can be detected and can detect a molten material height by using a vibration intensity at the frequency.

The molten material height detection method for detecting a molten material height in a smelting furnace includes measuring vibration at one or more positions of a furnace wall of a lower portion of the smelting furnace, calculating a vibration intensity at a frequency that is correlated with vibration generated by introduction of a gas into an inflow hole of the lower portion by analyzing a frequency of the vibration, and detecting the molten material height by using a corrected vibration intensity obtained by removing influence of blast volume of a gas introduced through the inflow hole from the vibration intensity at the frequency.

FIG. 2

EP 4 617 384 A1

## Description

Technical Field

The present invention relates to a molten material height detection method, a molten material height detection apparatus, and a method for manufacturing a molten material that detect a height of a molten material in a smelting furnace whose inside cannot be directly observed on the basis of vibration of the smelting furnace.

Background Art

One example of the smelting furnace whose inside cannot be directly observed is a blast furnace for an iron-making process. The blast furnace is a facility for producing pig iron by causing iron ore, which is a raw material of iron, and coke, which is a fuel, to react by heating using a high-temperature gas. Molten iron and slag generated in the blast furnace are accumulated as a liquid pool in a bottom portion, and are discharged to an outside of the furnace and supplied to a next step every approximately three hours.

In operation of a blast furnace, when heat of the blast furnace becomes insufficient or a particle diameter in a packed bed column present in a bottom portion of the blast furnace decreases, flow resistance of a molten material increases, and an amount of molten material discharged to an outside of the furnace decreases in some cases. As a result, a liquid level of the molten material rises, and gas permeability in the blast furnace deteriorates, which leads to furnace cooling and damage of a furnace body facility. There is concern that this finally leads to stoppage of operation of the blast furnace, causing a marked decrease in amount of production of iron and steel products in an entire iron and steel works. In view of such concern, it is necessary to always grasp an amount of molten material accumulated in a blast furnace and detect a blast furnace trouble early.

There are techniques of detecting excess accumulation by measuring a liquid level of a molten material in a blast furnace. Patent Literature 1 discloses a technique of calculating a molten material height by taking two or more images of a discharge flow of a molten material discharged from a blast furnace to find a discharge speed and substituting the discharge speed into an energy conservation law. Patent Literature 2 discloses a technique of inputting an elastic wave to a blast furnace and measuring a molten material height from a wave height of reflected echo of the elastic wave. Patent Literature 3 discloses a technique of measuring vibration intensities of a furnace wall of a lower portion of a blast furnace, calculating a vibration intensity in a frequency band that is correlated with a fluctuation of a molten slag and iron height by analyzing frequencies of the vibration intensities, and calculating a height of molten slag and iron in the blast furnace by using the calculated intensity in the frequency band.

Citation List

Patent Literature

PTL 1: Japanese Unexamined Patent Application Publication No. 2017-160498
PTL 2: Japanese Unexamined Patent Application Publication No. 10-185654
PTL 3: International Publication No. 2022/201717

Summary of Invention

Technical Problem

The technique of Patent Literature 1 uses a positive correlation between the discharge speed of the molten material and the height of the molten material and therefore undesirably cannot detect a rise in liquid level in a case where the discharge speed of the molten material decreases due to clogging of a discharge hole. Furthermore, visibility around the discharge hole is poor due to dust in a factory, and the molten material is sometimes violently ejected from the discharge hole. In such cases, a discharge flow surface cannot be accurately imaged, and the liquid level of the molten material cannot be calculated.

According to the technique of Patent Literature 2, it is predicted that there are a large number of factors that affect reflection characteristics of an elastic wave, such as crack propagation in furnace wall bricks constituting a smelting furnace and a coagulated molten material in the furnace, and it may be impossible to accurately measure a molten material height. According to the technique of Patent Literature 3, it is difficult to identify the frequency band that is correlated with a fluctuation in molten slag and iron height since a molten slag and iron height in an actual smelting furnace is unknown. The present invention was accomplished in view of these circumstances, and an object of the present invention is to provide a molten material height detection method and a molten material height detection apparatus that can easily identify a frequency at which a molten material height in a smelting furnace can be detected and detect a molten material height by using a vibration intensity at the frequency.

Solution to Problem

The present invention that can solve the above problem is summarized as follows.

[1] A molten material height detection method for detecting a molten material height in a smelting furnace, the molten material height detection method including: measuring vibration at one or more positions of a furnace wall of a lower portion of the smelting furnace; calculating a vibration intensity at a frequency that is correlated with vibration generated by introduction of a gas into an inflow hole of the lower portion by analyzing a frequency of the vibration; and detecting the molten material height by using a corrected vibration intensity obtained by removing influence of blast volume of a gas introduced through the inflow hole from the vibration intensity at the frequency.

[2] The molten material height detection method according to [1], in which the frequency that is correlated with vibration generated by introduction of a gas into the inflow hole is identified by examining a correlation between a vibration intensity in a frequency band having a predetermined width and blast volume of the gas.

[3] The molten material height detection method according to [1] or [2], in which the molten material height in the smelting furnace is detected as being a position of measurement of the vibration in a case where temporal transition of the corrected vibration intensity is local maximum or local minimum.

[4] The molten material height detection method according to any one of [1] to [3], in which the vibration is measured at two or more positions of the furnace wall of the lower portion that are different in a height direction.

[5] The molten material height detection method according to [1] or [2], in which a correspondence between the corrected vibration intensity and the molten material height is found in advance, and the molten material height in the smelting furnace is detected by using the corrected vibration intensity obtained by the measurement of the vibration and the correspondence.

[6] The molten material height detection method according to [5], in which assuming that an upper end position of a discharge hole is 0 and a lower end position of the inflow hole is 1 in a height direction of the furnace wall of the lower portion, the vibration is measured at a position equal to or greater than 0.90 and equal to or less than 1.00.

[7] A molten material height detection apparatus that detects a molten material height in a smelting furnace, the molten material height detection apparatus including: one or more vibrometers that are provided on a furnace wall of a lower portion of the smelting furnace and measure vibration of the furnace wall; and an arithmetic device that calculates a vibration intensity at a frequency that is correlated with vibration generated by introduction of a gas into an inflow hole of the lower portion by frequency analysis of the vibration measured by the vibrometers, and detects the molten material height by using a corrected vibration intensity obtained by removing influence of blast volume of a gas introduced through the inflow hole from the vibration intensity at the frequency.

[8] The molten material height detection apparatus according to [7], in which the one or more vibrometers include two or more vibrometers, and the two or more vibrometers are provided at two or more positions of the furnace wall of the lower portion that are different in a height direction.

[9] The molten material height detection apparatus according to [7], in which the arithmetic device detects the molten material height by using a correspondence between the corrected vibration intensity and the molten material height.

[10] The molten material height detection apparatus according to [9], in which assuming that an upper end position of a discharge hole is 0 and a lower end position of the inflow hole is 1 in a height direction of the furnace wall of the lower portion, the vibrometer is provided at a position equal to or greater than 0.90 and equal to or less than 1.00.

[11] A method for manufacturing a molten material by using a smelting furnace, the method including: measuring vibration at one or more positions of a furnace wall of a lower portion of the smelting furnace; calculating a vibration intensity at a frequency that is correlated with vibration generated by introduction of a gas into an inflow hole of the lower portion by analyzing a frequency of the vibration; detecting the molten material height in the smelting furnace by using a corrected vibration intensity obtained by removing influence of blast volume of a gas introduced through the inflow hole from the vibration intensity at the frequency; and adjusting a molten material manufacturing condition so that the detected molten material height falls within a target molten material height range.

[12] The method according to [11], in which a correspondence between the corrected vibration intensity and the molten material height is found in advance, and the molten material height in the smelting furnace is detected by using the corrected vibration intensity obtained by the measurement of the vibration and the correspondence.

Advantageous Effects of Invention

According to the present invention, a frequency of a vibration intensity used to detect a molten material height in a smelting furnace can be found by identifying a frequency that is correlated with vibration generated by introduction of a gas into an inflow hole of the smelting furnace, and therefore the frequency of the vibration intensity used to detect the molten material height in the smelting furnace can be easily identified. The molten material height in the smelting furnace whose inside cannot be directly observed can be detected with high accuracy by using a corrected vibration intensity obtained by removing influence of blast volume of a gas introduced through the inflow hole from the vibration intensity at the identified frequency.

Brief Description of Drawings

[Fig. 1] Fig. 1 is a partial cross-sectional view schematically illustrating a lower portion of a blast furnace 10.
[Fig. 2] Fig. 2 is a partial cross-sectional view schematically illustrating the lower portion of the blast furnace 10 and a molten material height detection apparatus 22 according to the first embodiment.
[Fig. 3] Fig. 3 is a graph illustrating temporal transition of a corrected vibration intensity.
[Fig. 4] Fig. 4 is a flowchart for explaining a method for identifying a frequency that is correlated with vibration generated by introduction of a gas.
[Fig. 5] Fig. 5 is a graph illustrating vibration data and vibration intensity data obtained by FTT processing of the vibration data.
[Fig. 6] Fig. 6 is a partial cross-sectional view schematically illustrating a lower portion of a blast furnace 10 and a molten material height detection apparatus 30 according to the second embodiment.
[Fig. 7] Fig. 7 is a graph illustrating a relationship between a corrected vibration intensity and a molten material height.
[Fig. 8] Fig. 8 is a schematic view illustrating a configuration of vibrometers and peripheral devices in Example 1.
[Fig. 9] Fig. 9 is a contour diagram illustrating values of coefficient of determination ($R^2$) between a vibration intensity and blast volume calculated from measurement values of vibrometers 24a and 24b.
[Fig. 10] Fig. 10 is a graph illustrating relationships between vibration intensities of the vibrometers 24a to 24c and blast volume.
[Fig. 11] Fig. 11 is a graph illustrating temporal transition of a molten material height found from operation data and temporal transition of the corrected vibration intensities.
[Fig. 12] Fig. 12 is a graph showing a regression formula indicating a correspondence between a corrected vibration intensity and a molten material height.
[Fig. 13] Fig. 13 is a graph illustrating a relationship between detected values of the molten material height calculated from the corrected vibration intensity and an actual value of the molten material height found from the operation data.

Description of Embodiments

[First Embodiment]

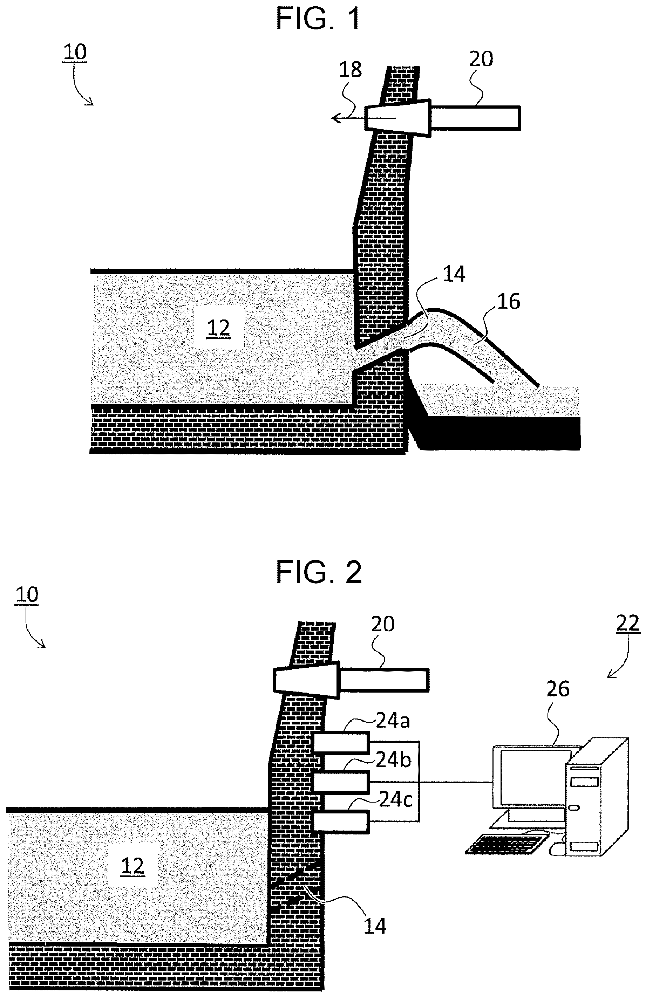

A first embodiment of the present invention is described below by using an example in which a blast furnace, which is an example of a smelting furnace, is used and a height of molten slag and iron, which is a molten material accumulated in a bottom portion of the blast furnace, is detected. Fig. 1 is a partial cross-sectional view schematically illustrating a lower portion of a blast furnace 10. Molten slag and iron (molten slag and iron is hereinafter referred to as a "molten material 12") including molten iron and slag is accumulated in the lower portion of the blast furnace 10. The molten material 12 is discharged through a discharge hole 14, and thus a molten material flow 16 is generated. A blast tuyere 20 for introducing a gas 18 is provided in the lower portion of the blast furnace 10. The blast tuyere 20 is an example of an inflow hole through which the gas 18 is introduced into the furnace.
Fig. 2 is a partial cross-sectional view schematically illustrating the lower portion of the blast furnace 10 and a molten material height detection apparatus 22 according to the first embodiment. The molten material height detection apparatus 22 includes, for example, three vibrometers 24a to 24c and an arithmetic device 26. The three vibrometers 24a to 24c are provided on a furnace wall at equal intervals in a height direction between the discharge hole 14 and the blast tuyere 20, and generate vibration data by measuring vibration of the furnace wall. The vibrometers 24a to 24c are, for example, piezoelectric elements.
The vibration data generated by the vibrometers 24a to 24c is output to and recorded in the arithmetic device 26. The arithmetic device 26 is a general-purpose computer such as a personal computer including an arithmetic unit such as a CPU and a storage unit such as a memory. The arithmetic device 26 performs frequency analysis on the vibration data acquired from the vibrometers 24a to 24c and thus calculates a vibration intensity at a frequency that is correlated with vibration generated by introducing a gas through the blast tuyere 20.

The arithmetic device 26 corrects the calculated vibration intensity to a corrected vibration intensity by using the following formula (1) to remove influence of blast volume from the vibration intensity. By thus correcting the vibration intensity to the corrected vibration intensity, influence of a fluctuation in blast volume given to the vibration intensity can be removed.

$$G^0 = G + (BV^0 - BV) \times a \ldots (1)$$

In the above formula (1), $G^0$ is the corrected vibration intensity ($m/s^2$), G is the vibration intensity ($m/s^2$) before the correction, $BV^0$ is a freely-selected standard blast volume ($Nm^3/min$), BV is blast volume ($Nm^3/min$) at a time of measurement of vibration data used to calculate G, and a is a slope of a regression line where the y-axis represents a vibration intensity at a frequency that is correlated with vibration caused by blast and the x-axis represents blast volume.

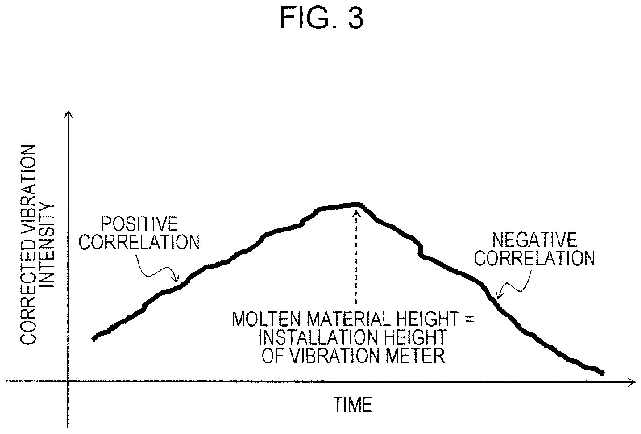

Fig. 3 is a graph illustrating temporal transition of the corrected vibration intensity. In Fig. 3, the horizontal axis represents time, and the vertical axis represents the corrected vibration intensity. The corrected vibration intensity obtains a positive correlation with the height of the molten material 12 in a case where the height of the molten material 12 is lower than an installation height at which a vibrometer is installed. On the other hand, the corrected vibration intensity obtains a negative correlation with the molten material height in a case where the height of the molten material 12 is higher than the installation height of the vibrometer. Accordingly, for example, in a case where the temporal transition of the corrected vibration intensity illustrated in Fig. 3 is a corrected vibration intensity obtained from the vibration data generated by the vibrometer 24b, a height of the molten material 12 at a time at which the corrected vibration intensity changes from positive correlation to negative correlation and becomes local maximum is an installation height of the vibrometer 24b.

The change of the corrected vibration intensity from positive correlation to negative correlation shows that a vibrometer has captured rising of a liquid level of the molten material. On the other hand, the corrected vibration intensity changes from positive correlation to negative correlation also in a case where a liquid level of the molten material at a position higher than an installation position of a vibrometer decreases. Even in this case, the height of the molten material 12 at a time at which the corrected vibration intensity changes from positive correlation to negative correlation and becomes local maximum is the installation height of the vibrometer.

The arithmetic device 26 monitors the temporal transition of the corrected vibration intensities obtained from the vibration data generated by the vibrometers 24a to 24c and identifies a vibrometer for which the corrected vibration intensity has changed from positive correlation to negative correlation. When the vibrometer is identified, the arithmetic device 26 regards an installation height of the identified vibrometer as the height of the molten material 12 and thus detects the height of the molten material 12. On the other hand, even in a case where a vibrometer for which the corrected vibration intensity has changed from positive correlation to negative correlation cannot be identified, in a case where a vibrometer for which the corrected vibration intensity shows positive correlation and a vibrometer for which the corrected vibration intensity shows negative correlation are present, the arithmetic device 26 regards a height between installation heights of these vibrometers as the height of the molten material 12 and thus detects the height of the molten material 12. In this way, the arithmetic device 26 detects the height of the molten material 12 in the blast furnace 10 from the vibration data generated by the vibrometers 24a to 24c.

Although an example in which the molten material height detection apparatus 22 according to the present embodiment includes the three vibrometers 24a to 24c has been illustrated, this is not restrictive. The molten material height detection apparatus 22 need just include at least one vibrometer, and the height of the molten material 12 can be detected in a case where a corrected vibration intensity obtained from vibration data generated by the vibrometer changes from positive correlation to negative correlation. However, the molten material height detection apparatus 22 preferably includes two or more vibrometers that are installed at positions of the lower portion of the blast furnace 10 that are different in the height direction since the height of the molten material 12 is detected on the basis of installation heights of the vibrometers as described above. A detection range of the height of the molten material 12 in the lower portion of the blast furnace 10 can be thus widened in the height direction.

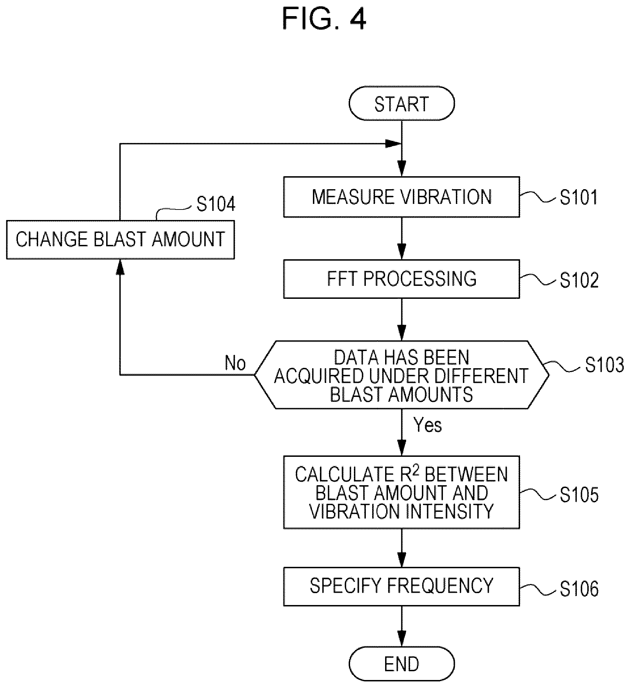

Fig. 4 is a flowchart for explaining a method for identifying a frequency that is correlated with vibration generated by introduction of a gas. A method for identifying a frequency that is correlated with vibration generated by introducing a gas through the blast tuyere 20 is described with reference to Fig. 4. The frequency is preferably identified by using the vibrometer 24a closest to the blast tuyere 20 and is preferably identified during a period where the blast furnace 10 is stably operating. The period where the blast furnace 10 is stably operating means a period where a coke ratio in blast furnace operation is within a target range and a fluctuation of gas permeability in the blast furnace is low.

First, the vibrometer 24a measures vibration of the lower portion of the blast furnace 10 and generates vibration data (step S101). FFT processing (step S102) is performed on the vibration data to perform frequency analysis of the vibration data. Note that the vibration data may be subjected to overlap processing, smoothing processing, and window function processing as needed before the FFT processing.

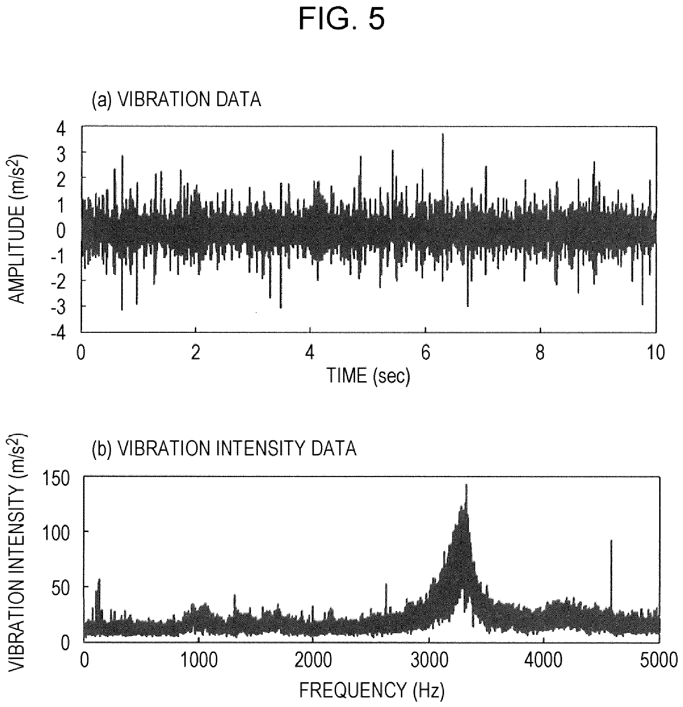

Fig. 5 is a graph illustrating vibration data and vibration intensity data obtained by FTT processing of the vibration data. Fig. 5(a) illustrates the vibration data, and Fig. 5(b) illustrates the vibration intensity data. The vibration data illustrated in Fig. 5(a) is thus converted into the vibration intensity data illustrated in Fig. 5(b) by FFT processing. It is preferable to calculate a vibration intensity at all frequencies by using the vibration intensity data.

The vibration intensity may be a vibration intensity in a frequency band having a predetermined width before and after a target frequency. For example, in a case where the predetermined width is $\pm 100$ Hz, a vibration intensity at a frequency 1100 Hz is an arithmetic average of vibration intensities at frequencies present between 1000 Hz and 1200 Hz. Note that an interval between frequencies present in a frequency band is freely set by the FFT processing of the vibration data. For example, in a case where a sampling frequency of the vibrometer is 10000 Hz and a recording length is 10 sec, the interval between frequencies is 3.3 Hz.

See Fig. 4 again. In a case where the vibration intensity data has not been acquired plural times under conditions of different blast volume (step S103: No), the processes in step S101 and step S102 are repeatedly performed again after changing the blast volume (step S104). On the other hand, in a case where the vibration intensity data has been acquired plural times under conditions of different blast volume (step S103: Yes), a coefficient of determination ($R^2$) between blast volume and a vibration intensity at all frequencies is calculated (step S105).

When the coefficient of determination ($R2$) between blast volume and a vibration intensity at all frequencies is calculated, a frequency for which the coefficient of determination is largest among the frequencies is identified as a frequency that is correlated with vibration generated by introduction of a gas (step S106). In this way, a frequency that is correlated with vibration generated by introduction of a gas is identified in advance.

Note that the frequency that is correlated with vibration generated by introduction of a gas may be identified by using a plurality of vibrometers. For example, in a case where the vibrometer 24a and the vibrometer 24b are used, it is only necessary to calculate, for each of these vibrometers, a coefficient of determination ($R_2$) between blast volume and a vibration intensity at all frequencies, average the coefficients of determination of the vibrometer 24a and the vibrometer 24b, and identify a frequency for which the average is largest.

When a coefficient of determination between blast volume and a vibration intensity is calculated, it is preferable to calculate the coefficient of determination ($R^2$) in consideration of a predetermined frequency width for each frequency. For example, the coefficient of determination may be calculated for each frequency in consideration of a frequency width of $\pm 25$ Hz to $\pm 300$ Hz. Even in this case, it is only necessary to check a coefficient of determination ($R2$) at each frequency and in each frequency width corresponding to the frequency and identify a frequency for which an average of the coefficients of determination is largest as a frequency that is correlated with vibration generated by introduction of a gas. By thus taking a predetermined frequency width into consideration for each frequency, a difference in coefficient of determination between frequencies is made large, and a frequency whose coefficient of determination is large is easily identified.

As described above, the molten material height detection method and detection apparatus according to the first embodiment detect the height of the molten material 12 by using a vibration intensity at a frequency that is correlated with vibration generated by introducing a gas through the blast tuyere 20. Since the frequency that is correlated with vibration generated by introducing a gas through an inflow hole of a smelting furnace can be easily identified by acquiring vibration data at different blast volume, a frequency of a vibration intensity used to detect a molten material height in the smelting furnace can be easily identified. The molten material height in the smelting furnace whose inside cannot be directly observed can be detected with high accuracy by using a corrected vibration intensity obtained by removing influence of blast volume of a gas introduced through the inflow hole from the vibration intensity at the identified frequency.

A molten material manufacturing condition is preferably adjusted so that a molten material height thus detected falls within a target molten material height range in the smelting furnace. For example, in a case where the molten material height is likely to exceed the target range, it is only necessary to adjust the molten material manufacturing condition so that an amount of charged raw materials is decreased or an amount of discharged molten material is increased. In a case where the molten material height is likely to go below the target range, it is only necessary to adjust the molten material manufacturing condition so that an amount of charged raw materials is increased or an amount of discharged molten material is decreased. By thus adjusting the molten material manufacturing condition so that the molten material height falls within the target molten material height range, for example, excess rise in liquid level of the molten material is prevented or reduced in the blast furnace, and a molten material can be manufactured while preventing or reducing furnace cooling and damage of a furnace body facility caused by deterioration of gas permeability.

[Second Embodiment]

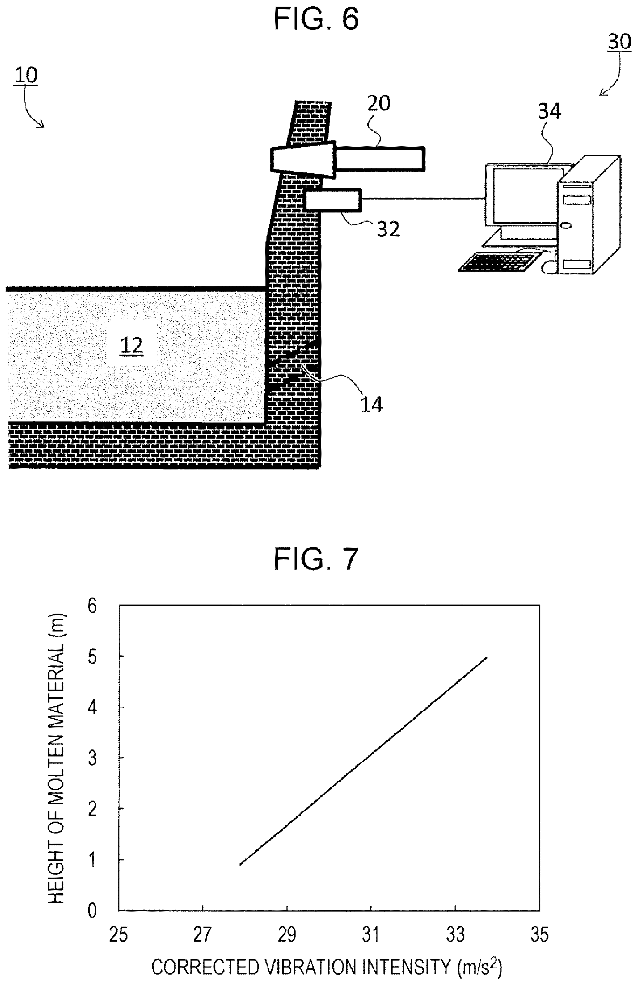

Next, a second embodiment of the present invention is described by using an example in which a blast furnace 10, which is an example of a smelting furnace, is used and a height of a molten material 12 accumulated in a bottom portion of the blast furnace 10 is detected, as in the first embodiment. Fig. 6 is a partial cross-sectional view schematically illustrating a lower portion of the blast furnace 10 and a molten material height detection apparatus 30 according to the second embodiment. The molten material height detection apparatus 30 includes a single vibrometer 32 and an arithmetic device 34. In the example illustrated in Fig. 6, constituent elements identical to those in Fig. 2 are given identical reference signs, and description thereof is omitted.

The vibrometer 32 creates vibration data by measuring vibration of a furnace wall of the lower portion. The vibrometer 32 is, for example, a piezoelectric element.

The vibration data generated by the vibrometer 32 is output to and recorded in the arithmetic device 34. The arithmetic device 34 is also a general-purpose computer such as a personal computer including an arithmetic unit such as a CPU and a storage unit such as a memory. The arithmetic device 34 performs frequency analysis on the vibration data acquired from the vibrometer 32 and thus calculates a vibration intensity at a frequency that is correlated with vibration generated by introduction of a gas through a blast tuyere 20. The arithmetic device 34 corrects the calculated vibration intensity to a corrected vibration intensity by using the above formula (1) to remove influence of blast volume from the vibration intensity.

Fig. 7 is a graph illustrating a relationship between the corrected vibration intensity and the molten material height. In Fig. 7, the horizontal axis represents the corrected vibration intensity ($m/s^2$), and the vertical axis represents the molten material height (m). A regression formula showing a correspondence between the corrected vibration intensity and the height of the molten material 12 such as the one illustrated in Fig. 7 is found in advance and is stored in the arithmetic device 34. The regression formula showing a correspondence between the corrected vibration intensity and the height of the molten material 12 is preferably created by using operation data during as long a period as possible.

When the corrected vibration intensity is calculated, the arithmetic device 34 reads out the regression formula showing a correspondence between the corrected vibration intensity and the height of the molten material 12 illustrated in Fig. 7, and detects the height of the molten material 12 by using the regression formula and the calculated corrected vibration intensity. In this way, the molten material height detection apparatus 30 according to the second embodiment detects the height of the molten material 12 in the blast furnace 10.

The vibrometer 32 is preferably installed at a position close to the blast tuyere 20. This makes it easy to detect vibration resulting from blast by the vibrometer 32. Assuming that an upper end position of the discharge hole 14 is 0 and a lower end position of the blast tuyere 20 is 1 in a height direction of the wall of the lower portion of the blast furnace 10, the vibrometer 32 is preferably installed at a position equal to or greater than 0.90 and equal to or less than 1.00, more preferably installed at a position equal to or greater than 0.95 and equal to or less than 1.00, still more preferably installed at a position of 1.00. If the vibrometer 32 is installed at a position higher than the lower end position of the blast tuyere 20, vibration measured by the vibrometer 32 is undesirably influenced by vibration caused by fall of a raw material in the blast furnace.

As described above, the molten material height detection method and detection apparatus according to the second embodiment also detect the height of the molten material 12 by using a vibration intensity at a frequency that is correlated with vibration generated by introducing a gas through the blast tuyere 20. Since the frequency that is correlated with vibration generated by introducing a gas through an inflow hole of a smelting furnace can be easily identified by acquiring vibration data at different blast volume, it is possible to easily identify a frequency of a vibration intensity used to detect a molten material height in a smelting furnace. By using a corrected vibration intensity obtained by removing influence of blast volume of a gas introduced through an inflow hole from the vibration intensity at the identified frequency and the regression formula, a molten material height in the smelting furnace whose inside cannot be directly observed can be detected with high accuracy.

Examples

[Example 1]

Next, Example 1 in which a height of a molten material accumulated in a lower portion of a large-sized blast furnace whose volume is 5000 $m^3$ was detected to confirm validity of the present invention is described. In the present example, an apparatus having an identical configuration to the molten material height detection apparatus 22 illustrated in Fig. 2 was used. The vibrometers 24a to 24c were installed at equal intervals between the blast tuyere 20 and the discharge hole 14 provided in the lower portion of the blast furnace 10. Table 1 below shows installation heights of the vibrometers 24a to 24c from a furnace bottom and heights of the blast tuyere and the discharge hole.

[Table 1]

|  | installation height (m) |
| --- | --- |
| blast tuyere 20 | 7.5 |
| vibrometer 24a | 5.9 |

(continued)

|  | installation height (m) |
| --- | --- |
| vibrometer 24b | 5.2 |
| vibrometer 24c | 4.8 |
| discharge hole 14 | 2.3 |

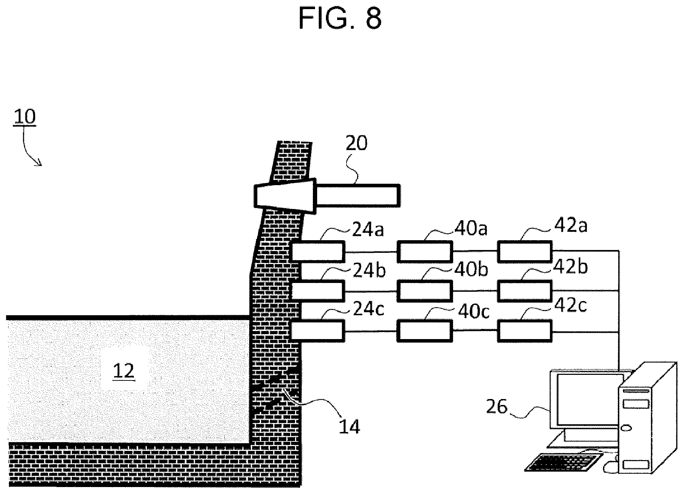

Fig. 8 is a schematic view illustrating a configuration of the vibrometers and peripheral devices in Example 1. In Fig. 8, constituent elements identical to those in Fig. 2 are given identical reference signs, and description thereof is omitted. Amplifiers 40a to 40c for amplifying vibration data were connected to the vibrometers 24a to 24c, respectively. The vibration data amplified by the amplifiers 40a to 40c were stored in data loggers 42a to 42c. The vibration data stored in the data loggers 42a to 42c was processed by using the arithmetic device 26. As a vibration measurement condition, a sampling frequency was set to 10000 Hz and a recording length was set to 10 sec assuming a vibration frequency resulting from blast to be measured in the blast furnace. Vibration of the furnace wall was measured every three minutes for four days under this condition, and thus vibration data during this period was acquired.

In the present example, the vibration data was subjected to overlap processing, smoothing processing, and window function processing before FFT analysis. In the overlap processing, raw data of the vibration data was divided into a portion of a size of 3/10 of the recording length, and a half of the divided portion was overlapped. The smoothing processing was performed on each divided frame by using a Gaussian filter. In the window function processing, a hanning window was applied. After thus processing the divided frame, FFT analysis was performed, and an average of vibration intensities calculated by the FFT analysis of all divided frames was used.

After the FFT analysis, vibration intensities at all frequencies were calculated. An interval between the frequencies was 3.3 Hz. In Example 1, vibration having frequencies equal to or less than 5000 Hz was measured by the vibrometers 24a to 24c. To evaluate the vibration intensities at all the frequencies, the frequencies of the vibration were divided into a standard vibration frequency f (Hz) and a frequency width $\Delta$f (Hz). That is, an average of vibration intensities at frequencies included in a frequency band f $\pm$ $\Delta$f was used as a vibration intensity at the standard vibration frequency f (Hz) that takes the frequency width $\Delta$f (Hz) into consideration, f was changed by 50 Hz from 300 Hz to 4700 Hz, and $\Delta$f was changed by 25 Hz from 25 Hz to 300 Hz.

After thus calculating a vibration intensity at each frequency, a coefficient of determination ($R^2$) between the vibration intensity and blast volume was calculated. In Example 1, the coefficient of determination ($R^2$) was calculated by using vibration data measured by the vibrometers 24a and 24b in one day in which the height of the molten material was lowest among the four days in which measurement was performed.

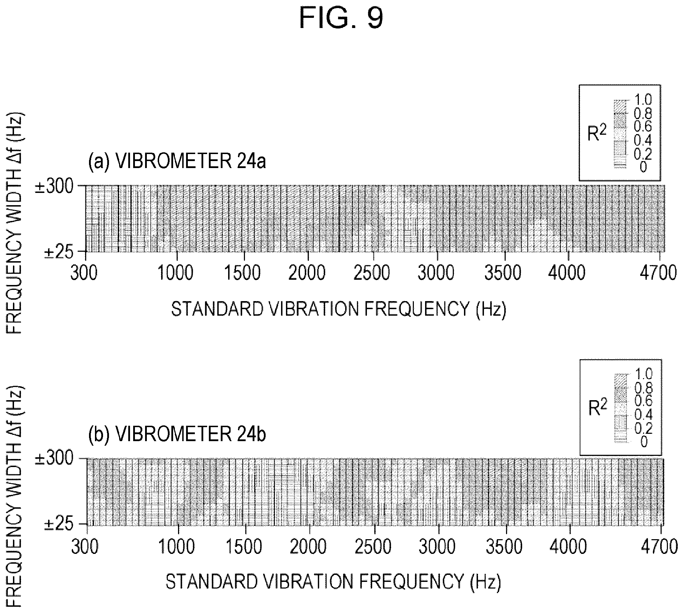

Fig. 9 is a contour diagram illustrating values of the coefficient of determination ($R^2$) between the vibration intensity and the blast volume calculated from the measurement values of the vibrometers 24a and 24b. Fig. 9(a) is a contour diagram of the vibrometer 24a, and Fig. 9(b) is a contour diagram of the vibrometer 24b. In Example 1, $R^2$ between a vibration intensity at f = 1400 Hz taking $\Delta$f = 250 Hz into consideration and blast volume was largest. Accordingly, f = 1400 Hz taking $\Delta$f = 250 Hz into consideration was identified as a frequency that is correlated with vibration generated by introduction of a gas.

Next, blast volume correction of the vibration intensity was performed. To perform the correction, a formula of a regression line used for the above formula (1) was found by using vibration intensities and blast volume in two days where an amount of accumulation of the molten material in the lower portion of the furnace was small among the four days in which the vibration data was measured.

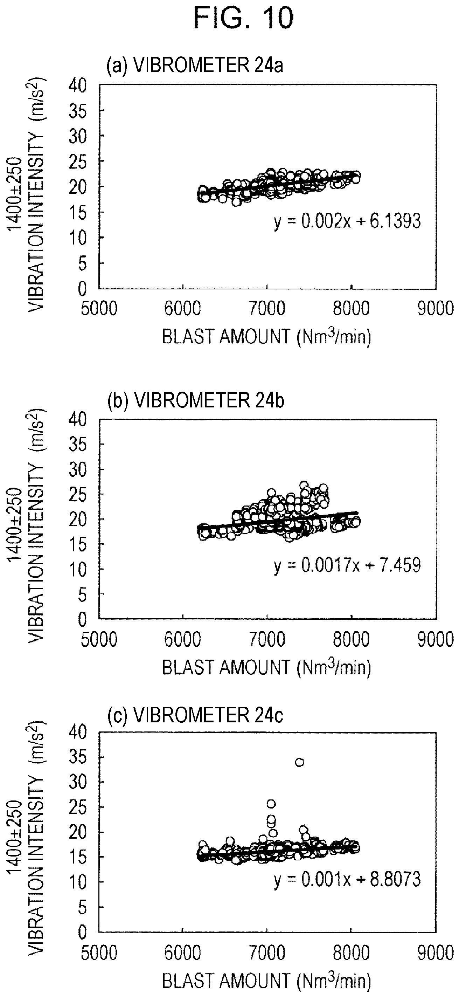

Fig. 10 is graphs illustrating relationships between vibration intensities of the vibrometers 24a to 24c and blast volume. Fig. 10(a) illustrates a graph and a regression line of the vibrometer 24a, Fig. 10(b) illustrates a graph and a regression line of the vibrometer 24b, and Fig. 10(c) illustrates a graph and a regression line of the vibrometer 24c. In these graphs, the horizontal axis represents blast volume ($Nm^3$/min), and the vertical axis represents a vibration intensity ($m/s^2$). By substituting slopes of these regression lines into the above formula (1), the following formulas (2) to (4) for correcting a vibration intensity into a corrected vibration intensity were calculated.

$$G^0 = G + (BV - BV^0) \times 2.00 \times 10^{-3} \ ... \ (2)$$

$$G^0 = G + (BV - BV^0) \times 1.72 \times 10^{-3} \ ... \ (3)$$

$$G^0 = G + (BV - BV^0) \times 1.04 \times 10^{-3} \ ... \ (4)$$

A corrected vibration intensity from which influence of blast volume was removed was calculated by using the above formulas (2) to (4). A molten material height was detected by using the calculated corrected vibration intensity.

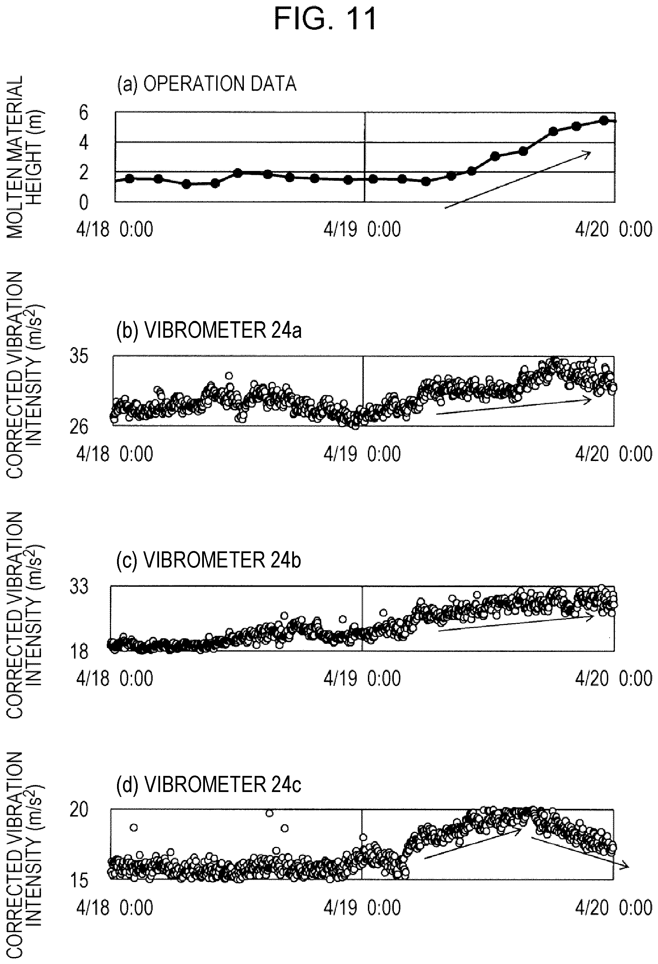

Fig. 11 is graphs illustrating temporal transition of the molten material height found from operation data and temporal transition of the corrected vibration intensities. Fig. 11(a) is a graph illustrating temporal transition of the molten material height found from operation data. In Fig. 11(a), the horizontal axis represents time, and the vertical axis represents the molten material height (m). Figs. 11(b) to 11(d) are graphs illustrating temporal transition of the corrected vibration intensities of the vibrometers 24a to 24c. In Figs. 11(b) to 11(d), the horizontal axis represents time, and the vertical axis represents the corrected vibration intensity ($m/s^2$).

As illustrated in Fig. 11, the corrected vibration intensity of the vibrometer 24c starts to decrease from 16:30 on April 19, whereas the corrected vibration intensities of the vibrometers 24a and 24b continue to increase. This shows that the molten material height is between 4.8 m to 5.2 m, that is, between the vibrometers 24b and 24c during a period from 16:30 to 23:59 on April 19. As shown from a value of the molten material height estimated at the same time, the molten material height increases from approximately 4.4 m to 5.2 m during the period from 16:30 to 23:59 on April 19. That is, the molten material height detected from the vibration intensity and the value of the molten material height estimated from the operation data almost match. This confirms that the molten material height can be detected by the method of Example 1.

[Example 2]

Next, Example 2 in which it was confirmed that a molten material height can be detected by using a single vibrometer is described. In Example 2, a molten material height in a large-sized blast furnace having a volume of 5000 $m^3$ identical to that of Example 1 was detected by using the vibration data of the vibrometer 24a. FFT analysis was performed on the vibration data acquired from the vibrometer 24a after overlap processing, smoothing processing, and window function processing, as in Example 1.

As in Example 1, a frequency that is correlated with vibration resulting from blast was f = 1400 Hz taking $\Delta f$ = 250 Hz into consideration. Vibration intensities at the frequency during a period from 0:00 to 23:59 on April 19 were corrected by using the above formula (2) to calculate corrected vibration intensities. Furthermore, a molten material height in the blast furnace was calculated by using operation data obtained in the blast furnace during the period from 0:00 to 23:59 on April 19 and the following formula (5).

$$h = (Wi/\rho i + Ws/\rho s) / (\varepsilon \times Sb) \ldots (5)$$

In the above formula (5), h is a molten material height (m), Wi is a weight (kg) of furnace bottom molten iron, pi is a molten iron density ($kg/m^3$), Ws is a weight (kg) of furnace bottom molten slag, ps is a molten slag density ($kg/m^3$), $\varepsilon$ is a furnace bottom void fraction (-), and Sb is a furnace bottom cross-sectional area ($m^3$). (-) indicates being dimensionless.

The weight of the furnace bottom molten iron and the weight of the furnace bottom molten slag were found by summing up values obtained by subtracting an amount of drained molten iron and an amount of drained molten slag from an amount of generated molten iron and an amount of generated molten slag obtained in each tapping work and correcting an error of a weighing apparatus of the actual machine. In Example 2, the molten iron density was 6800 $kg/m^3$, the molten slag density was 2650 $kg/m^3$, and the furnace bottom void fraction was 0.35. A regression formula indicating a correspondence between a corrected vibration intensity and a molten material height was obtained by using the corrected vibration intensities and the molten material heights thus calculated.

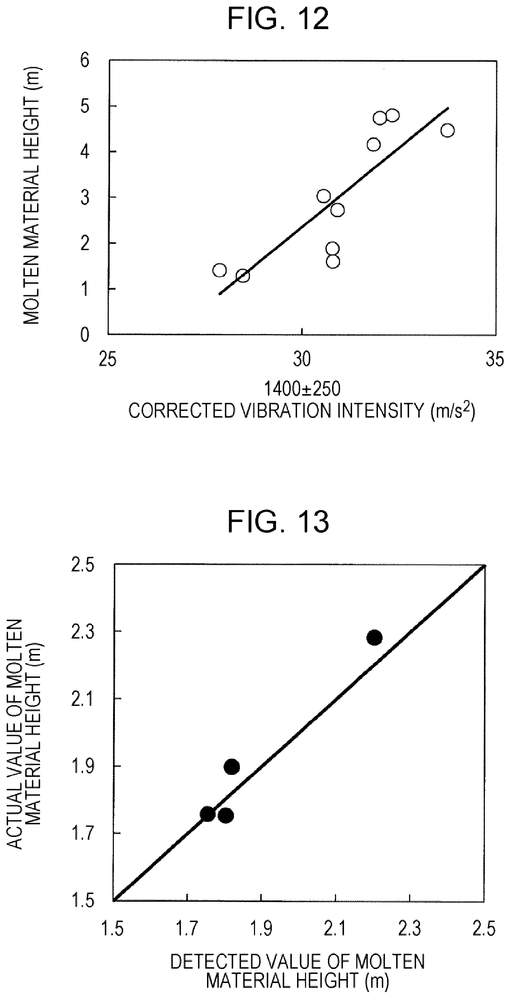

Fig. 12 is a graph showing a regression formula between a corrected vibration intensity and a molten material height. In Fig. 12, the horizontal axis represents the corrected vibration intensity ($m/s^2$), and the vertical axis represents the molten material height (m). The regression formula illustrated in Fig. 12 is a calibration curve for detecting the molten material height from the corrected vibration intensity. The regression formula obtained from the graph of Fig. 12 is the following formula (6).

$$h = G^0 \times 0.6953 - 18.486 \ldots (6)$$

In the above formula (6), $G^0$ is the corrected vibration intensity ($m/s^2$). The molten material height was detected by using the formula (6). In the molten material height detection, the molten material height was calculated by using corrected vibration intensities at four points close to 0 o'clock on August 31 and the above formula (6). In detection of an actual value of the molten material height, the actual value was calculated by using operation data at the same four points and the above formula (5).

Fig. 13 is a graph illustrating a relationship between the detected value of the molten material height calculated from the corrected vibration intensity and the actual value of the molten material height found from the operation data. In Fig. 13, the horizontal axis represents the detected value (m) of the molten material height calculated from the corrected vibration intensity, and the vertical axis represents the actual value (m) of the molten material height. As illustrated in Fig. 13, the detected value of the molten material height calculated from the regression formula (6) and the actual value of the molten material height found from the operation data almost match. This result confirms that a molten material height can be detected by the method of Example 2.

Reference Signs List

| | |
|---|---|
| 10 | blast furnace |
| 12 | molten material |
| 14 | discharge hole |
| 16 | molten material flow |
| 18 | gas |
| 20 | blast tuyere |
| 22 | molten material height detection apparatus |
| 24a to 24c | vibrometer |
| 26 | arithmetic device |
| 30 | molten material height detection apparatus |
| 32 | vibrometer |
| 40a to 40c | amplifier |
| 42a to 42c | data logger |

**Claims**

1. A molten material height detection method for detecting a molten material height in a smelting furnace, the molten material height detection method comprising:

   measuring vibration at one or more positions of a furnace wall of a lower portion of the smelting furnace;
   calculating a vibration intensity at a frequency that is correlated with vibration generated by introduction of a gas into an inflow hole of the lower portion by analyzing a frequency of the vibration; and
   detecting the molten material height by using a corrected vibration intensity obtained by removing influence of blast volume of a gas introduced through the inflow hole from the vibration intensity at the frequency.

2. The molten material height detection method according to claim 1, wherein
   the frequency that is correlated with vibration generated by introduction of a gas into the inflow hole is identified by examining a correlation between a vibration intensity in a frequency band having a predetermined width and blast volume of the gas.

3. The molten material height detection method according to claim 1 or 2, wherein
   the molten material height in the smelting furnace is detected as being a position of measurement of the vibration in a case where temporal transition of the corrected vibration intensity is local maximum.

4. The molten material height detection method according to any one of claims 1 to 3, wherein
   the vibration is measured at two or more positions of the furnace wall of the lower portion that are different in a height direction.

5. The molten material height detection method according to claim 1 or 2, wherein

   a correspondence between the corrected vibration intensity and the molten material height is found in advance, and
   the molten material height in the smelting furnace is detected by using the corrected vibration intensity obtained by the measurement of the vibration and the correspondence.

6. The molten material height detection method according to claim 5, wherein
   assuming that an upper end position of a discharge hole is 0 and a lower end position of the inflow hole is 1 in a height direction of the furnace wall of the lower portion, the vibration is measured at a position equal to or greater than 0.90 and equal to or less than 1.00.

7. A molten material height detection apparatus that detects a molten material height in a smelting furnace, the molten material height detection apparatus comprising:

one or more vibrometers that are provided on a furnace wall of a lower portion of the smelting furnace and measure vibration of the furnace wall; and

an arithmetic device that calculates a vibration intensity at a frequency that is correlated with vibration generated by introduction of a gas into an inflow hole of the lower portion by frequency analysis of the vibration measured by the vibrometers, and detects the molten material height by using a corrected vibration intensity obtained by removing influence of blast volume of a gas introduced through the inflow hole from the vibration intensity at the frequency.

8. The molten material height detection apparatus according to claim 7, wherein

the one or more vibrometers include two or more vibrometers, and

the two or more vibrometers are provided at two or more positions of the furnace wall of the lower portion that are different in a height direction.

9. The molten material height detection apparatus according to claim 7, wherein the arithmetic device detects the molten material height by using a correspondence between the corrected vibration intensity and the molten material height.

10. The molten material height detection apparatus according to claim 9, wherein assuming that an upper end position of a discharge hole is 0 and a lower end position of the inflow hole is 1 in a height direction of the furnace wall of the lower portion, the vibrometer is provided at a position equal to or greater than 0.90 and equal to or less than 1.00.

11. A method for manufacturing a molten material by using a smelting furnace, the method comprising:

measuring vibration at one or more positions of a furnace wall of a lower portion of the smelting furnace;

calculating a vibration intensity at a frequency that is correlated with vibration generated by introduction of a gas into an inflow hole of the lower portion by analyzing a frequency of the vibration;

detecting the molten material height in the smelting furnace by using a corrected vibration intensity obtained by removing influence of blast volume of a gas introduced through the inflow hole from the vibration intensity at the frequency; and

adjusting a molten material manufacturing condition so that the detected molten material height falls within a target molten material height range.

12. The method according to claim 11, wherein

a correspondence between the corrected vibration intensity and the molten material height is found in advance, and

the molten material height in the smelting furnace is detected by using the corrected vibration intensity obtained by the measurement of the vibration and the correspondence.

## FIG. 1

## FIG. 2

# FIG. 3

# FIG. 4

START

MEASURE VIBRATION — S101

CHANGE BLAST AMOUNT — S104

FFT PROCESSING — S102

No ← DATA HAS BEEN ACQUIRED UNDER DIFFERENT BLAST AMOUNTS — S103

Yes

CALCULATE $R^2$ BETWEEN BLAST AMOUNT AND VIBRATION INTENSITY — S105

SPECIFY FREQUENCY — S106

END

# FIG. 5

(a) VIBRATION DATA

(b) VIBRATION INTENSITY DATA

# FIG. 6

# FIG. 7

FIG. 8

# FIG. 9

(a) VIBROMETER 24a

FREQUENCY WIDTH Δf (Hz)

±300

±25

STANDARD VIBRATION FREQUENCY (Hz)

300 1000 1500 2000 2500 3000 3500 4000 4700

$R^2$
1.0
0.8
0.6
0.4
0.2
0

(b) VIBROMETER 24b

FREQUENCY WIDTH Δf (Hz)

±300

±25

STANDARD VIBRATION FREQUENCY (Hz)

300 1000 1500 2000 2500 3000 3500 4000 4700

$R^2$
1.0
0.8
0.6
0.4
0.2
0

# FIG. 10

(a) VIBROMETER 24a

$y = 0.002x + 6.1393$

(b) VIBROMETER 24b

$y = 0.0017x + 7.459$

(c) VIBROMETER 24c

$y = 0.001x + 8.8073$

# FIG. 11

(a) OPERATION DATA

(b) VIBROMETER 24a

(c) VIBROMETER 24b

(d) VIBROMETER 24c

# FIG. 12

1400±250
CORRECTED VIBRATION INTENSITY (m/s²)

# FIG. 13

DETECTED VALUE OF MOLTEN
MATERIAL HEIGHT (m)

## INTERNATIONAL SEARCH REPORT

| International application No. |
| --- |
| **PCT/JP2023/032420** |

**A. CLASSIFICATION OF SUBJECT MATTER**

**C21B 7/24**(2006.01)i; **F27B 1/28**(2006.01)i; **F27D 21/00**(2006.01)i
FI: C21B7/24 305; F27B1/28; F27D21/00 N

According to International Patent Classification (IPC) or to both national classification and IPC

**B. FIELDS SEARCHED**

Minimum documentation searched (classification system followed by classification symbols)

C21B7/24; F27B1/28; F27D21/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2022/201717 A1 (JFE STEEL CORPORATION) 29 September 2022 (2022-09-29) entire text, all drawings | 1-12 |
| A | JP 2009-162430 A (JFE STEEL CORPORATION) 23 July 2009 (2009-07-23) entire text, all drawings | 1-12 |
| A | JP 9-145452 A (KAWASAKI STEEL CORP.) 06 June 1997 (1997-06-06) entire text, all drawings | 1-12 |
| A | KR 10-2012-0023404 A (POSCO) 13 March 2012 (2012-03-13) entire text, all drawings | 1-12 |
| A | JP 2019-535995 A (POSCO) 12 December 2019 (2019-12-12) entire text, all drawings | 1-12 |

☐ Further documents are listed in the continuation of Box C.　　☑ See patent family annex.

| | | |
| --- | --- | --- |
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |
| "T" | later document published after the international filing date or priority date and not in conflict with the application but cited to understand the principle or theory underlying the invention | |
| "X" | document of particular relevance; the claimed invention cannot be considered novel or cannot be considered to involve an inventive step when the document is taken alone | |
| "Y" | document of particular relevance; the claimed invention cannot be considered to involve an inventive step when the document is combined with one or more other such documents, such combination being obvious to a person skilled in the art | |
| "&" | document member of the same patent family | |

| Date of the actual completion of the international search | Date of mailing of the international search report |
| --- | --- |
| **15 November 2023** | **28 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/032420**

| Patent document cited in search report | | | Publication date (day/month/year) | Patent family member(s) | | | Publication date (day/month/year) |
|---|---|---|---|---|---|---|---|
| WO | 2022/201717 | A1 | 29 September 2022 | (Family: none) | | | |
| JP | 2009-162430 | A | 23 July 2009 | (Family: none) | | | |
| JP | 9-145452 | A | 06 June 1997 | (Family: none) | | | |
| KR | 10-2012-0023404 | A | 13 March 2012 | (Family: none) | | | |
| JP | 2019-535995 | A | 12 December 2019 | WO | 2018/097499 | A1 | |
| | | | | EP | 3546600 | A1 | |
| | | | | CN | 110023515 | A | |
| | | | | KR | 10-1839841 | B1 | |

**REFERENCES CITED IN THE DESCRIPTION**

**Patent documents cited in the description**

- JP 2017160498 A
- JP 10185654 A
- WO 2022201717 A